(19) Europäisches Patentamt / European Patent Office / Office européen des brevets

(11) **EP 4 124 853 A1**

(12) **EUROPEAN PATENT APPLICATION**

(43) Date of publication:
**01.02.2023 Bulletin 2023/05**

(51) International Patent Classification (IPC):
***G01N 27/327*** *(2006.01)*

(21) Application number: **21188472.1**

(22) Date of filing: **29.07.2021**

(52) Cooperative Patent Classification (CPC):
**G01N 27/3272; G01N 27/3276**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NEAT Biotech, Inc.**
**Hsinchu City 30060 (TW)**

(72) Inventor: **LIEN, Chun Lung**
**300060 Hsinchu City (TW)**

(74) Representative: **Zoli, Filippo**
**Brunacci & Partners S.r.l.**
**Via Pietro Giardini, 625**
**41125 Modena (IT)**

Remarks:
Amended claims in accordance with Rule 137(2) EPC.

(54) **BIOSENSOR APPARATUS**

(57)    A biosensor apparatus includes a substrate plate, a plurality of metal conductive layers, a plurality of working electrodes, a counter electrode and an insulating layer. Each metal conductive layer is disposed on the substrate plate and has a first upper surface. The working electrodes and the counter electrode are disposed on the corresponding metal conductive layers. The insulating layer covers the metal conductive layers and surrounds the working electrodes and the counter electrode, wherein the working electrodes and the counter electrode protrude beyond a second upper surface of the insulating layer, a first top surface of each working electrode is higher than the first upper surface of the metal conductive layer, and a second top surface of the counter electrode is higher than the first top surface of each working electrode. The above-mentioned biosensor apparatus can increase the sensing sensitivity.

100

Fig. 1

**Description**

BACKGROUND

Field of Invention

The present invention relates to a sensor apparatus, and more particularly to a biosensor apparatus for detecting biological molecules.

Description of Related Art

Recently, a variety of detection methods for biological molecules have been developed to diagnose various diseases, conduct researches associated with physiology, metabolism and monitor environmental factors, etc. The development of Micro-electromechanical Systems (MEMS) has attracted much attention due to its integration of semiconductor processes and precision machinery technologies, which can be used to manufacture a semiconductor microchip for sensing optics, chemicals, biological molecules or other properties. However, as the semiconductor industry has progress into nanometer technology nodes in pursuit of higher device density, higher performance and lower costs, challenges from manufacturing and design issues have resulted in the development in three-dimensional design. Accordingly, there is an urgent need for developing biosensor chips with higher performance and low costs.

SUMMARY

The present invention is directed to a biosensor apparatus, which includes a plurality of working electrodes and a counter electrode protruding beyond the insulating layer, wherein a second top surface of the counter electrode is higher than first top surfaces of the working electrodes to enhance maximum electric field intensity of the working electrodes, thereby enhancing the sensitivity of sensing.

In one embodiment, the proposed biosensor apparatus includes a substrate plate, a plurality of metal conductive layers, a plurality of working electrodes, a counter electrode and an insulating layer. The metal conductive layers are disposed over the substrate plate and each of the metal conductive layers has a first upper surface. The working electrodes are disposed over the first upper surface of the corresponding metal conductive layers, wherein each of the working electrodes has a first top surface that is higher than the first upper surface of the metal conductive layer. The counter electrode is disposed over the first upper surface of the corresponding metal conductive layer and adjacent to the working electrodes, wherein the counter electrode has a second top surface that is higher than the first top surfaces of the working electrodes. The insulating layer covers the metal conductive layers and surrounds the working electrodes and the counter electrode, wherein a second upper surface of the insulating layer is between the first top surfaces of the working electrodes and the first upper surface of the metal conductive layers, so that the working electrodes and the counter electrode protrude beyond the second upper surface of the insulating layer.

The objective, technologies, features and advantages of the present invention will become apparent from the following description in conjunction with the accompanying drawings wherein certain embodiments of the present invention are set forth by way of illustration and example.

BRIEF DESCRIPTION OF THE DRAWINGS

The present disclosure can be more fully understood by reading the following detailed description of the embodiment when read with the accompanying figures:

Fig. 1 is a cross-sectional view of a biosensor device according to some embodiments of the present disclosure.
Figs. 2-12 are cross-sectional views of a biosensor device during various stages of production according to some embodiments of the present disclosure.
Fig. 13 is a top view of a biosensor apparatus according to some embodiments of the present disclosure.
Fig. 14A is a cross-sectional view along line A-A of the biosensor apparatus according to some embodiments of the present disclosure.
Fig. 14B is a partial magnified view exemplarily according to the cross-sectional view of Fig. 14A.
Fig. 15 is a cross-sectional view of the biosensor device according to some embodiments of the present disclosure.
Fig. 16 is a layout of working electrodes, counter electrodes and reference electrodes of a biosensor apparatus according to some embodiments of the present disclosure.

DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature "over" or "on" a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

As used herein, the singular forms "a", "an" and "the" are intended to include the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof.

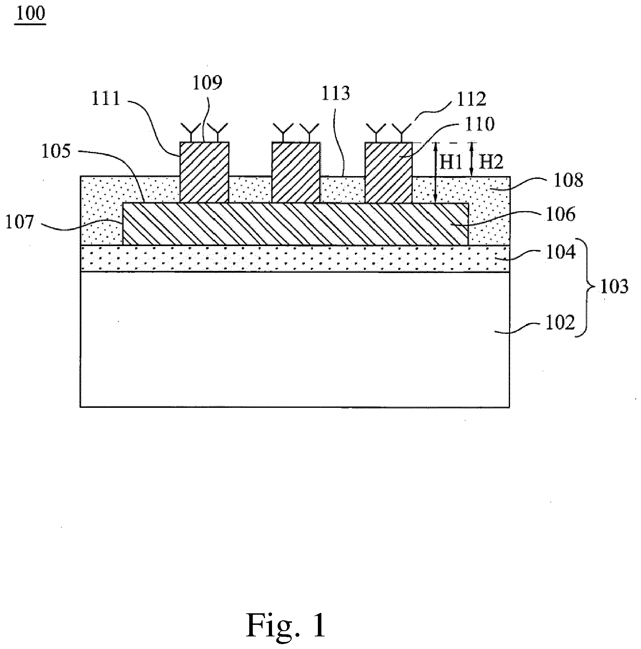

Fig. 1 is a cross-sectional view of a biosensor device in accordance with some embodiments. As shown in Fig. 1, the biosensor device 100 includes a substrate plate 103, a metal conductive layer 106, a second insulating layer 108, a plurality of working electrodes 110 and a plurality of biological probes 112. In some embodiments, the substrate plate 103 includes a base substrate 102 and a first insulating layer 104. The substrate plate 103 may further include, but not limited to, GaN, SiC, SiGe, Ge, or combinations thereof, or other semiconductor materials. The base substrate 102, for example, may be a silicon substrate. The base substrate 102 may include various doping configurations, depending on design requirements as known in the art. In one embodiment, the base substrate 102 may be a highly-doped and low-resistivity semiconductor substrate. In another embodiment, the substrate plate 103 is a glass substrate without the first insulating layer 104.

The first insulating layer 104 is disposed over the base substrate 102. In one embodiment, the first insulating layer 104 may include, but not limited to, an oxide, a nitride, an oxynitride or combinations thereof, such silicon oxide, silicon nitride, and silicon oxynitride. The first insulating layer 104 is formed of low-k dielectric material such that the biosensor device 100 has excellent insulating properties. In some embodiments, the first insulating layer 104 may have a thickness in a range from about 0.02 $\mu$m to about 0.25 $\mu$m, for example, about 0.10 $\mu$m, about 0.15 $\mu$m or about 0.20 $\mu$m.

The metal conductive layer 106 is disposed over the substrate plate 103, and has a sidewall 107 and first upper surface 105. The sidewall 107 adjoins the first upper surface 105 and the second insulating layer 108 covers the sidewall 107. In one embodiment, the metal conductive layer 106 may include, but not limited to, Ti, Ni, Ag, Al, Al/Cu alloy, Al/Si/Cu alloy or combinations thereof. In one embodiment, the metal conductive layer 106 may have a thickness in a range from about 0.02 $\mu$m to about 0.7 $\mu$m, for example, about 0.1 $\mu$m, about 0.2 $\mu$m, about 0.3 $\mu$m, about 0.4 $\mu$m, about 0.5 $\mu$m or about 0.6 $\mu$m.

Each working electrode 110 is disposed over the first upper surface 105 of the metal conductive layer 106, and has a first top surface 109 and a sidewall 111. Each first top surface 109 is higher than the first upper surface 105 of the metal conductive layer 106, each sidewall 111 adjoins each first top surface 109, and the second insulating layer 108 merely covers a portion of each sidewall 111. Each working electrode 110 has a first height H1 protruding beyond the metal conductive layer 106. In one embodiment, each working electrode 110 may have the first height H1 in a range from about 0.05 $\mu$m to about 1 $\mu$m, for example, about 0.05 $\mu$m, about 0.1 $\mu$m, about 0.2 $\mu$m, about 0.3 $\mu$m or about 0.4 $\mu$m. In some embodiments, each working electrode 110 may have a width of about 0.08 $\mu$m to about 0.4 $\mu$m, for example, about 0.08 $\mu$m, about 0.1 $\mu$m, about 0.2 $\mu$m or about 0.3 $\mu$m. In one embodiment, each working electrode 110 may have an aspect ratio in a range from about 0.125 to about 7.5, for example, about 0.2 or about 0.3.

In some embodiments of the present disclosure, the working electrodes 110 may be in a shape of a cylinder or a regular polygonal prism such as a triangular prism, a quadrangular prism, a pentagonal prism, a hexagonal prism or an octagonal prism. In some embodiments, the working electrodes 110 may include, but not limited to, Ta, TaN, Cu, Ti, TiN, W, Ti, Ni, Ag, Al, Al/Cu alloy, Al/Si/Cu alloy or combinations thereof. In some embodiments, the material of the working electrodes 110 may be TiN, preferably.

The biological probes 112 may be modified and connected to the working electrodes 110 using various methods known in the art. In accordance with some embodiments of the present disclosure, the biological probes 112 may include, but not limited to, nucleic acid, cell, antibody, enzyme, polypeptide, aptamer, peptide, carbohydrate or combinations thereof. It is noted that the biological probes 112 may detect various biological molecules. For example, when using antibody as the biological probe 112, a target molecule (i.e., antigen) in a sample may be bound or reacted with the biological probe 112, thereby detecting the presence of the target molecule using various techniques known in the art.

The second insulating layer 108 covers the metal conductive layer 106 and surrounds the working electrodes 110. The second upper surface 113 of the second insulating layer 108 is positioned between the first top surfaces 109 of the working electrodes 110 and the first upper surfaces 105 of the metal conductive layer 106 such that the working electrodes 110 protrudes beyond the second upper surface 113 of the second insulating layer 108. The protruding portion has a second height H2, which is the vertical distance from each first top surface 109 to the second upper surface 113 of the second insulating layer 108. In some embodiments, the second height H2 may be in a range from about 0.01 $\mu$m to about 0.55 $\mu$m, for example, about 0.05 $\mu$m, about 0.15 $\mu$m, about 0.3 $\mu$m, about 0.45 $\mu$m, about 0.5 $\mu$m, or about 0.6 $\mu$m. Therefore, when a voltage is applied to the working electrodes 110, the working electrodes 110 generate an electric field surrounding the protruding working electrodes 110. The coverage of the electric field is not limited to the first top surfaces 109 of the working electrodes 110 and further extends to the sidewalls 111 of the working electrodes 110 so that the electrochemical reaction is greatly enhanced, thereby increasing the strength of signal. At the same applied voltage, the working electrode 110 having three-dimensional structure provides superior sensitivity over the planar working electrode of the prior art.

In some embodiments, the second insulating layer 108 may include, but not limited to, an oxide, a nitride, an oxynitride or combinations thereof, such as silicon oxide, silicon nitride, and silicon oxynitride. In some embodiments, the material of the first insulating layer 104 is the same as the material of the second insulating layer 108. In yet some embodiments, the material of the first insulating layer 104 is different from the material of the second insulating layer 108.

In addition, when a voltage is applied to the working electrodes 110, background signal is also generated, and that interferes the detection result. The generation of the background signal is related to the cross-sectional area of electrode. When the cross-sectional area (CA) is larger, the background signal is higher. In accordance with some embodiments of the present disclosure, when the voltage is applied to the working electrodes 110, the working electrodes 110 generate the electric field having a coverage range that is larger than the planar working electrodes of the prior art. The coverage range of the electric field is not limited to the first top surfaces 109 of the working electrodes 110 and further extends to the sidewalls 111 of the working electrodes 110. Accordingly, the widths of the working electrodes 110 can be adjusted to be smaller than that of the planar working electrodes in the prior art while sustaining the same effective coverage of the electric field. Therefore, in accordance with embodiments of the present disclosure, the widths of the working electrodes 110 may be smaller than the widths of the planar working electrodes in the prior art, and have smaller cross-sectional area than the planar working electrodes of the prior art, thereby reducing the generation of the background signal.

As described above, in some embodiments, the first height H1 of each working electrode 110 is ranged from about 0.05 $\mu$m to about 0.6 $\mu$m. When the first height H1 of each working electrode 110 is less than 0.05 $\mu$m, the second height H2 of each protruding portion of working electrode 110 may be less than 0.01 $\mu$m. In this situation, when the voltage is applied to the working electrodes 110, the extension of the coverage of the effective electric field is limited and thus the enhancement of the electrochemical reaction of the biological probe 112 is unobvious. Accordingly, it can be seen that the higher the protruding portion of the working electrodes 110, the wider the effective electric field coverage is and the better the electrochemical reaction is. It is noted that each working electrode 110 has an aspect ratio ranged from about 0.125 to about 7.5. When each working electrode 110 has the aspect ratio greater than 7.5, the working electrodes are easily formed with defects in structure, thereby reducing the reliability of entire device.

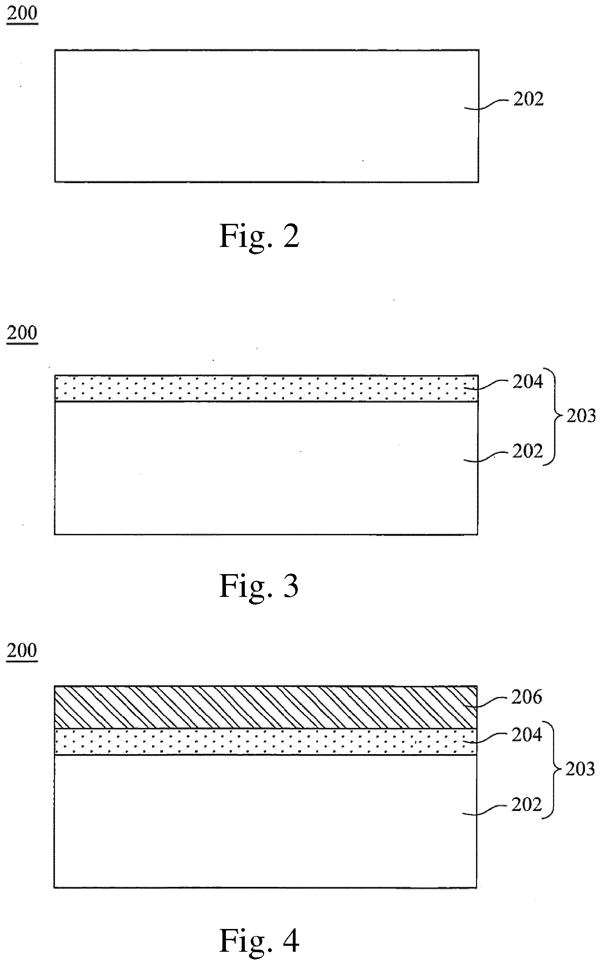

Figs. 2-12 are cross-sectional views of a biosensor device during various stages of production in accordance with some embodiments of the present disclosure. As shown in Fig. 2 and Fig. 3, a substrate plate 203 is provided. In some embodiments, the substrate plate 203 includes a base substrate 202 and a first insulating layer 204 formed over the base substrate 202. The first insulating layer 204 may be formed using atomic layer deposition (ALD), physical vapor deposition (PVD), chemical vapor deposition (CVD), chemical oxidation, heat oxidation and/or other suitable process. In one embodiment, the first insulating layer 204 may include, but not limited to, an oxide, a nitride, an oxynitride or combinations thereof, such as silicon oxide, silicon nitride, and silicon oxynitride. In some embodiments, the first insulating layer 204 is formed with a thickness ranged from about 0.02 $\mu$m to about 0.25 $\mu$m, for example, about 0.10 $\mu$m, about 0.15 $\mu$m or about 0.20 $\mu$m.

Referring to Fig.4, in this step, a metal conductive layer 206 is formed over the first insulating layer 204. In some embodiments, the metal conductive layer 206 may be formed using PVD, CVD, electron beam evaporation, sputtering, electroplating and/or other suitable process. In one embodiment, the metal conductive layer 206 may include, but not limited to, Ti, Ni, Ag, Al, Al/Cu alloy, Al/Si/Cu alloy or combinations thereof. In one embodiment, the metal conductive layer 206 is formed with a thickness ranged from about 0.3 $\mu$m to about 0.5 $\mu$m, for example, about 0.3 $\mu$m, about 0.4 $\mu$m or about 0.5 $\mu$m.

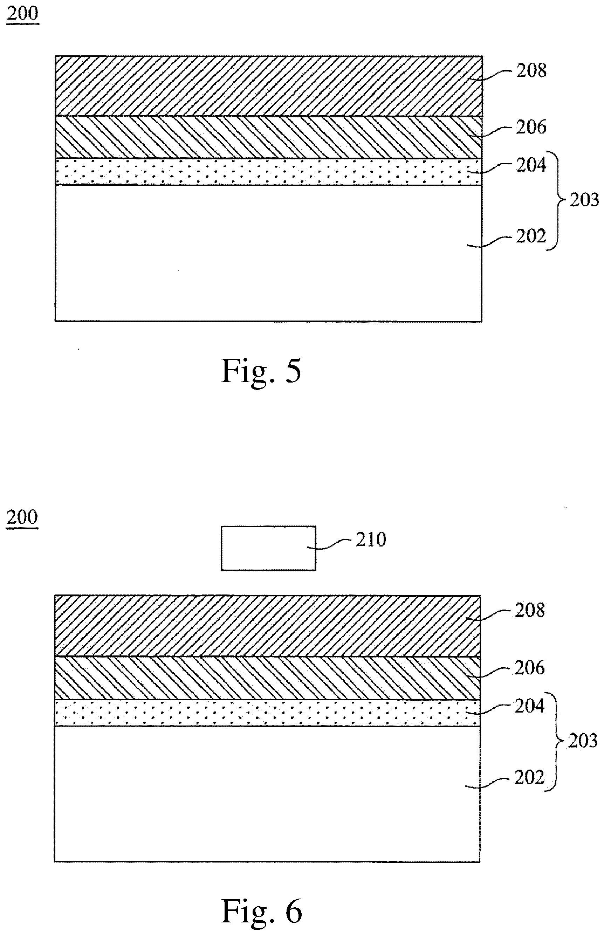

Referring to Fig.5, in this step, an electrically conductive layer 208 is deposited over the metal conductive layer 206. In some embodiments, the electrically conductive layer 208 may be formed using PVD, CVD, electron beam evaporation, sputtering, electroplating and/or other suitable process. In some embodiments, the electrically conductive layer 208 may include, but not limited to, Ta, TaN, Cu, Ti, TiN, W or combinations thereof. In some embodiments, the electrically conductive layer 208 may have a thickness ranged from about 0.05 $\mu$m to about 0.6 $\mu$m, for example, about 0.05 $\mu$m, about 0.1 $\mu$m, about 0.2 $\mu$m, about 0.3 $\mu$m or about 0.4 $\mu$m.

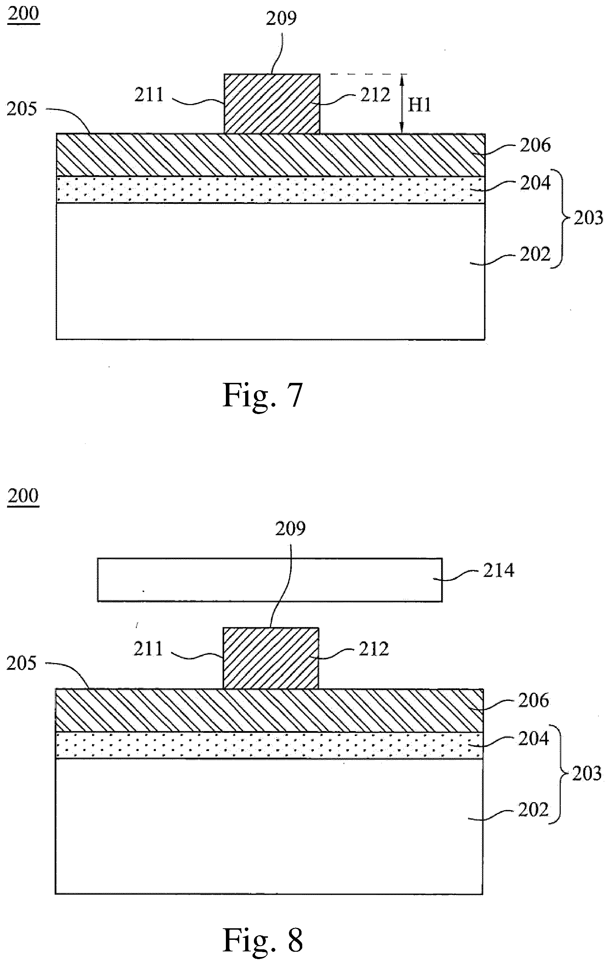

Referring to Fig. 6 and Fig. 7, a patterning process is performed on the electrically conductive layer 208, thereby forming a plurality of working electrodes 212 (only a single working electrode is shown exemplarily). As shown in Fig. 6, a patterned photoresist layer (not shown) is formed on the electrically conductive layer 208 by using a photomask 210 in a photolithographic process, and the photoresist layer may be positive photoresist or negative photoresist. Next, in Fig. 7, an etching process is performed on the electrically conductive layer 208 upon which the patterned photoresist layer is utilized, thereby forming a plurality of working electrode 212 and exposing a first upper surface 205 of the metal conductive layer 206. Each working electrode 212 has a first height H1. Each working electrode 212 has a first top surface 209 and a sidewall 211. Each first top surface 209 is higher than the first upper surface 205 of the metal conductive layer 206. Each sidewall 211 adjoins each first top surface 209.

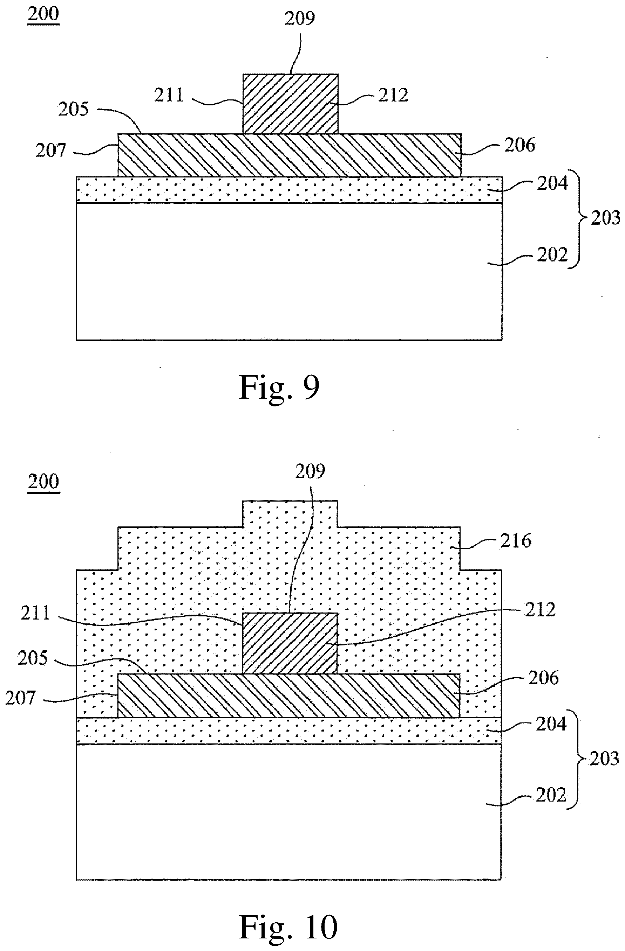

Referring to Fig. 8 and Fig. 9, a patterning process is performed on the metal conductive layer 206. As shown in Fig. 8, a patterned photoresist layer (not shown) is formed on the working electrodes 212 and the metal conductive layer 206 by using a photomask 214 in a photolithographic process, and the photoresist layer may include a positive photoresist or a negative photoresist. Next in Fig. 9, an etching process is performed on the metal conductive layer 206 upon which the patterned photoresist layer is utilized, thereby exposing a portion of an upper surface of the first insulating layer 204 below. Therefore, the metal conductive layer 206 has a sidewall 207 adjoins the first upper surface 205 and the exposed portion of the upper surface of the first insulating layer 204.

Referring to Fig. 10, an insulating material layer 216 is deposited over the first insulating layer 204, the metal conductive layer 206 and the working electrodes 212. In this step, the insulating material layer 216 may conformally cover the first insulating layer 204, the metal conductive layer 206 and the working electrodes 212. In some embodiments, the insulating material layer 216 may have multiple sub-layers and the material of each sub-layer is different from one another. In yet some embodiments, the insulating material layer 216 may have multiple sub-layers and the material of each sub-layer is the same as one another. In some embodiments, the insulating material layer 216 may be formed using PVD, CVD, plasma enhanced CVD (PECVD) and/or other suitable process.

In one embodiment, the insulating material layer 216 may include, but not limited to, an oxide, a nitride, an oxynitride or combinations thereof, such as silicon oxide, silicon nitride, and silicon oxynitride. In one embodiment, the insulating material layer 216 is made of tetraethoxysilane (TEOS).

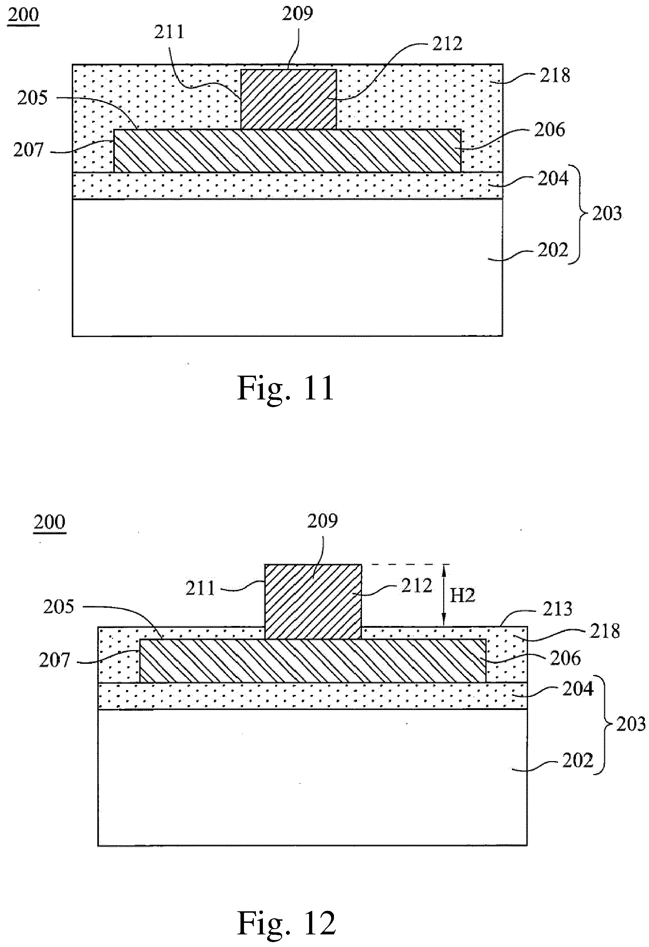

Referring to Fig. 11, a planarization process is performed on the insulating material layer 216 to form the second insulating layer 218. In this step, the planarization process is performed on the insulating material layer 216 such that the second insulating layer 218 has a substantial flat upper surface. In one embodiment, the planarization process may include chemical mechanical planarization (CMP) and/or other suitable process. In some embodiments, the insulating material layer 216 may have multiple sub-layers and the material of each sub-layer is different from one another such that the planarization process is more efficient.

Referring to Fig. 12, a portion of the second insulating layer 218 is removed by using a suitable etching process such that a second upper surface 213 of the second insulating layer 218 is positioned between the first upper surface 205 of the metal conductive layer 206 and the first top surfaces 209 of the working electrodes 212. Therefore, the working electrodes 212 protrude beyond the second upper surface 213 of the second insulating layer 218, and the protruding portion has a second height H2 which is the vertical distance from the first top surface 209 to the second upper surface 213 of second isolating layer 218. In some embodiments, the second height H2 may be in a range from about 0.01 $\mu$m to about 0.5 $\mu$m, for example, about 0.05 $\mu$m, about 0.15 $\mu$m, about 0.3 $\mu$m or about 0.45 $\mu$m. In some embodiments, a plurality of biological probes may further be modified onto the working electrodes 212 such that the biological probes are connected to the first top surfaces 209 of the working electrodes 212.

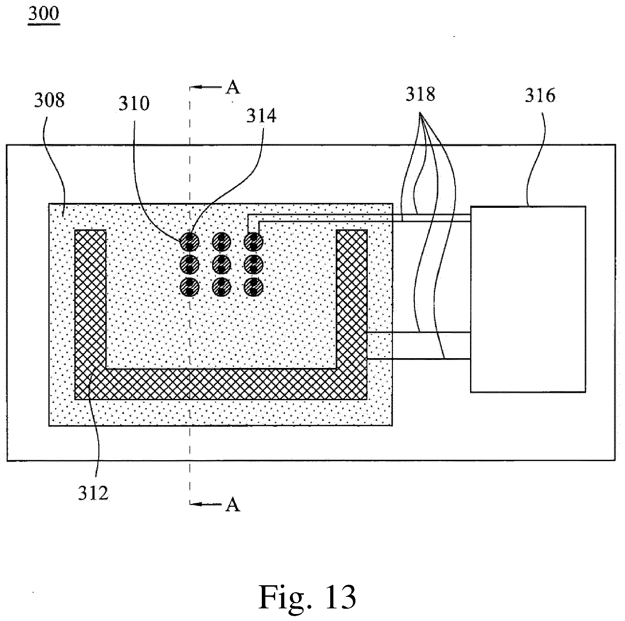

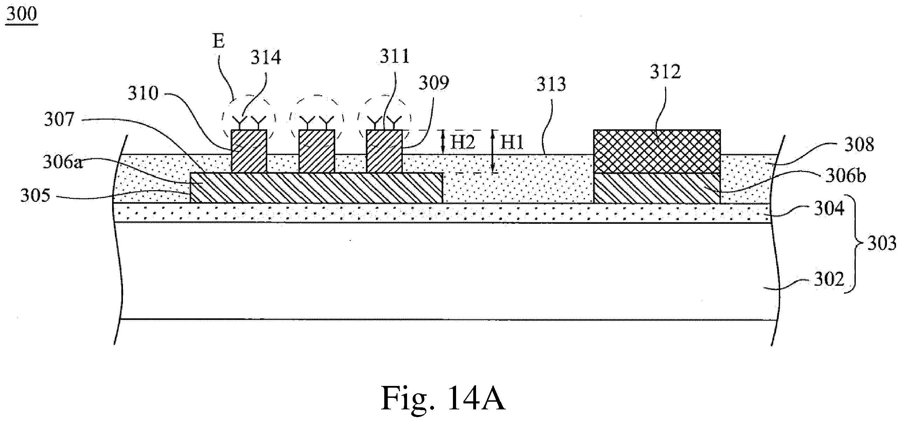

The biosensor device manufactured in accordance with various embodiments of the present disclosure is compatible with various biosensor apparatuses. Fig. 13 is a top view of a biosensor apparatus in accordance with some embodiments of the present disclosure. Fig. 14A is a cross-sectional view taken along line A-A in Fig. 13. As shown in Fig. 13 and Fig. 14A, a biosensor apparatus 300 includes a substrate plate 303, a metal conductive layer 306a, a metal conductive layer 306b, a second insulating layer 308, a plurality of working electrode 310, a counter electrode 312, a plurality of biological probes 314, a signal measurement unit 316 and wires 318.

Each of the working electrodes 310 and the counter electrode 312 may be electrically connected to the signal measurement unit 316 via one or more wires 318. Therefore, as shown in Fig. 14A, when a voltage is applied to the working electrodes 310, each of the working electrodes 310 generates an electric field E surrounding the corresponding working electrode 310. In the meantime, a test sample is provided and in contact with the biological probes 314. If a target molecule in the test sample is bound to the biological probe 314, the working electrodes 310 generate a signal such that the generated signal is transmitted to the signal measurement unit 316, thereby detecting the presence of the target molecules.

Referring to Fig. 14A, the metal conductive layer 306b is disposed over the first insulating layer 304. The counter electrode 312 is disposed over the metal conductive layer 306b. The working electrodes 310 are disposed over the first upper surface 307 of the metal conductive layer 307. In some embodiments, the material of the metal conductive layer 306b is the same as the material of the metal conductive layer 306a. In some embodiments, the material of the metal conductive layer 306b is different from the material of the metal conductive layer 306a. The substrate plate 303, the base substrate 302, the metal conductive layer 306a, the second insulating layer 308, the working electrodes 310 and the biological probes 314 may be respectively the same as the substrate plate 103, the base substrate 102, the metal conductive layer 106, the second insulating layer 108, the working electrodes 110 and the biological probes 112 described hereinbefore, and the descriptions thereof are omitted to avoid repetition.

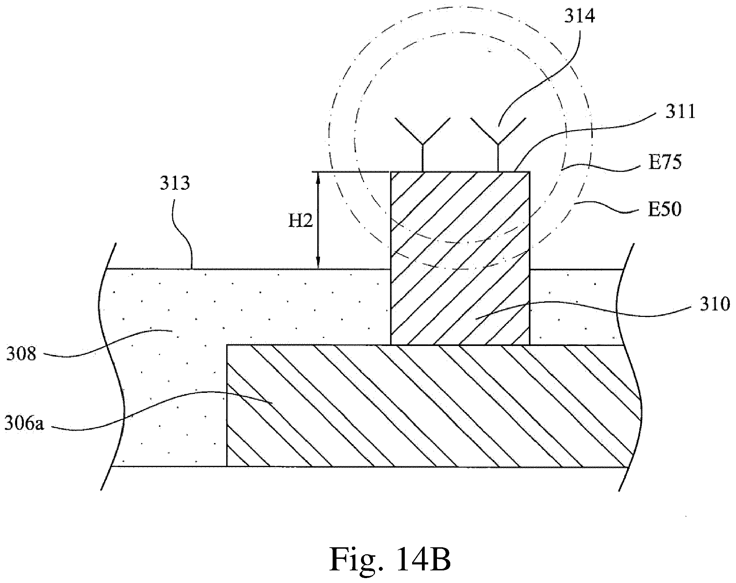

Referring to Fig. 14B, Fig. 14B is a partial magnified view exemplarily showing the cross-sectional view of Fig. 14A. When the voltage is applied to the working electrodes 310, each of the working electrodes 310 generates a corresponding electric field. Exemplarily, the dotted line E75 represents an iso-electric-field-intensity curve where the electric field intensity is 75% of the maximal electric field intensity in space. In other words, the electric field intensity of each point "inside" the dotted line E75 is greater than 75% of the maximal electric field intensity. Exemplarily, the dotted line E50 represents an iso-electric-field-intensity curve where the electric field intensity is 50% of the maximal electric field intensity in space. In other words, the electric field intensity of each point "inside" the dotted line E50 is greater than 55% of the maximal electric field intensity. In some embodiments, when a voltage is applied to the working electrodes 310, 75% of the maximum electric field intensity (i.e., the maximal magnitude of the electric field multiplied by 0.75) occurs at about 27-40% of the second height H2 from the first top surfaces 311 downwardly (i.e., the intersection of the working electrodes 310 and the dotted line E75); in other words, 75% of the maximal electric field intensity occurs at about 60-73% of the second height H2 from the second upper surface 313 upwardly. In some embodiments, when a voltage is applied to the working electrodes 310, 50% of the maximal electric field intensity (i.e., the maximal magnitude of the electric field multiplied by 0.5) occurs at about 80-93% of the second height H2 from the first top surfaces 311 downwardly (i.e., the intersection of the working electrodes 310 and the dotted line E50); in other words, 50% of the maximal electric field intensity occurs at about 7-20% of the second height H2 from the second upper surface 313 upwardly.

**Simulation of Electric Field**

In this experiment, COMSOL Multiphysics 4.4 simulation software was used to simulate the electric field intensity. As shown in Table 1 below, the used working electrode is in a shape of a cylinder and the cylindrical working electrode in Embodiment 1 has a radius of 0.05 $\mu$m, the maximal electric field intensity is $2.86 \times 10^6$ (v/m); the cylindrical working electrode in Embodiment 2 has a radius of 0.1 $\mu$m, and the maximal electric field intensity is $1.85 \times 10^6$ (v/m); the cylindrical working electrode in Embodiment 3 has a radius of 0.2 $\mu$m, and the maximal electric field intensity is $7.75 \times 10^5$ (v/m).

Table 1

| Working electrode | Electrode radius ($\mu$m) | Maximum magnitude of electric field (v/m) |
|---|---|---|
| Embodiment 1 | 0.05 | $2.86 \times 10^6$ |
| Embodiment 2 | 0.1 | $1.85 \times 10^6$ |
| Embodiment 3 | 0.2 | $7.75 \times 10^5$ |

As described above, the maximum magnitude of the electric field increases as electrode radius decreases. Next, as shown in Table 2 below, the coverage and the intensity of the electric field generated by the protruding part of the working electrode were simulated. When the working electrode is a conventional planar working electrode, it has a height of 0 $\mu$m (i.e., without any sidewall), and all the 100%, 75% and 50% of maximum magnitudes of the electric field occur at the level of the surface of working electrode. Then also referring to Table 2 below, calculated from the top surface of working electrode toward the insulating layer below, when the working electrode has a second height H2 of 0.15 $\mu$m, 75% of the maximal electric field intensity occurs at 0.05 $\mu$m from the top surface of working electrode; and 50% of the maximal electric field intensity occurs at 0.13 $\mu$m from the top surface of working electrode.

Table 2

| Height of working electrode (μm) | Height of 100% maximum magnitude of electric field | Height of 75% maximum magnitude of electric field | Height of 50% maximum magnitude of electric field |
|---|---|---|---|
| 0 | 0 | 0 | 0 |
| 0.15 | 0 | 0.05 | 0.13 |

To sum up, the biosensor device has the working electrode protruding beyond the insulating layer in accordance with various embodiments of the present disclosure. In electrochemical reactions, the greater the electric field, the faster the motion of the charged object is. As a result, the current density is higher.

A known equation of electrochemical reaction (Electrochemical Methods: Fundamentals and Applications. Allen J. Bard, Larry R. Faulkner, Wiley. ISBN: 0471043729) is shown as follows:

$$J_A(\text{x, t}) = -(\frac{F}{RT})z_A D_A C_A(\text{x, t})\varepsilon(\text{x})$$

$J_A(x, t)$ represents a current density of a charged object A located at a site "x" in a time "t". $Z_A$ represents a valence number of the charged object A. $D_A$ represents a diffusion coefficient of the charged object A. $C_A(x, t)$ represents a concentration of the charged object A located at the site x in the time $t$. $\varepsilon(x)$ represents an electric field of the charged object A located at the site x. The protruding working electrode results in the wider coverage of the electric field that affects the motion of the charge object, which is conducive to enhancing the efficiency of electrochemical reaction, thereby increasing the strength of signal. Therefore, the working electrode manufactured in accordance with the embodiment of the present disclosure may have a smaller width than the width of planar electrode known in the art, thereby enhancing the sensitivity.

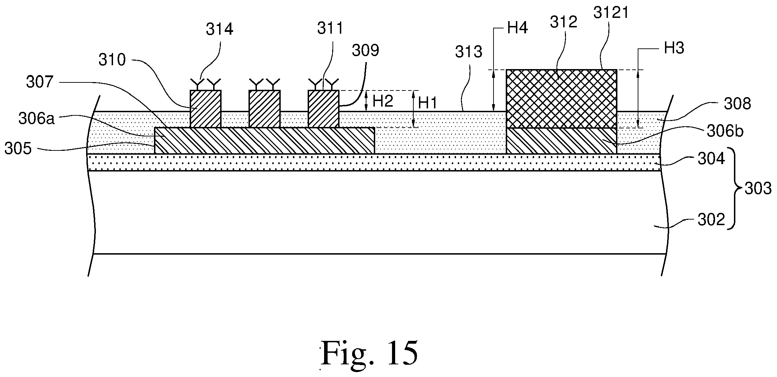

In the embodiment shown in Fig. 14A, the protrusion heights of the working electrodes 310 and the counter electrode 312 are the same, that is, the first top surfaces 311 of the working electrodes 310 and the top surface of the counter electrode 312 are located on the same plane, but it is not limited thereto. In one embodiment, referring to Fig. 15, the second insulating layer 308 covers the metal conductive layers 306a, 306b and the sidewalls thereof, and a portion of the sidewalls 309 of the working electrodes 310 and the counter electrode 312 so that the working electrodes 310 and the counter electrode 312 protrude beyond the second upper surface 313 of the insulating layer308. Different from the embodiment shown in Fig. 14A, the second top surface 3121 of the counter electrode 312 shown in Fig. 15 is higher than the first top surfaces 311 of the working electrodes 310. For example, the height difference between the first top surfaces 311 of the working electrodes 310 and the second top surface 3121 of the counter electrode 312 is less than 0.15 μm. In some embodiments, the height difference between the first top surfaces 311 of the working electrodes 310 and the second top surface 3121 of the counter electrode 312 is less than about 0.12 μm, or less than about 0.1 μm, or less than about 0.05 μm.

For example, the third height H3 of the counter electrode 312 protruding from the metal conductive layer 306b, i.e., from the second top surface 3121 of the counter electrode 312 to the first upper surface of the metal conductive layer 306b, is in a range from about 0.05 μm to about 1 μm. In some embodiments, the third height H3 of the counter electrode 312 may be about 0.1 μm, 0.15 μm, 0.2 μm, 0.25 μm, 0.3 μm, 0.35 μm, 0.4 μm, 0.45 μm, 0.5 μm, 0.55 μm, 0.6 μm or 0.65 μm. In one embodiment, the fourth height H4 of the counter electrode 312 protruding from the second insulating layer 308, i.e., from the second top surface 3121 of the counter electrode 312 to the second upper surface 313 of the second insulating layer 308, is in a range from about 0.01 μm to about 0.55 μm. In some embodiments, the fourth height H4 of the counter electrode 312 may be about 0.1 μm, 0.15 μm, 0.2 μm, 0.25 μm, 0.3 μm, 0.35 μm, 0.4 μm, 0.45 μm, or 0.5 μm.

The second height H2 of the working electrode was set to 0.05 μm, and the simulation analysis of the electric field intensity was performed using COMSOL Multiphysics 4.4 simulation analysis software. The analysis results are shown in Table 3. Compared with the fourth height H4 of the counter electrode equal to the second height H2 of the working electrode (Comparison 2), the maximum electric field intensity of the working electrode drops when the fourth height H4 of the counter electrode is smaller than the second height H2 of the Working electrode (Comparison 1). When the fourth height H4 of the counter electrode is greater than the second height H2 of the working electrode (Embodiment 4 and Embodiment 5), the maximum electric field intensity of the working electrode can be enhanced. It should be noted that the maximum electric field intensity of the working electrode also drops when the height difference between the fourth height H4 of the counter electrode and the second height H2 of the working electrode is greater than 0.15 μm (Embodiment 6). Therefore, the height difference between the fourth height H4 of the counter electrode and the second height H2 of the working electrode should be less than 0.15 $\mu$m.

Table 3

|  | Fourth height H4 of counter electrode ($\mu$m) | Maximum magnitude of electric field (v/m) |
|---|---|---|
| Comparison 1 | 0.01 | $9.04 \times 10^5$ |
| Comparison 2 | 0.05 | $9.33 \times 10^5$ |
| Embodiment 4 | 0.1 | $10.00 \times 10^5$ |
| Embodiment 5 | 0.15 | $9.94 \times 10^5$ |
| Embodiment 6 | 0.2 | $8.73 \times 10^5$ |

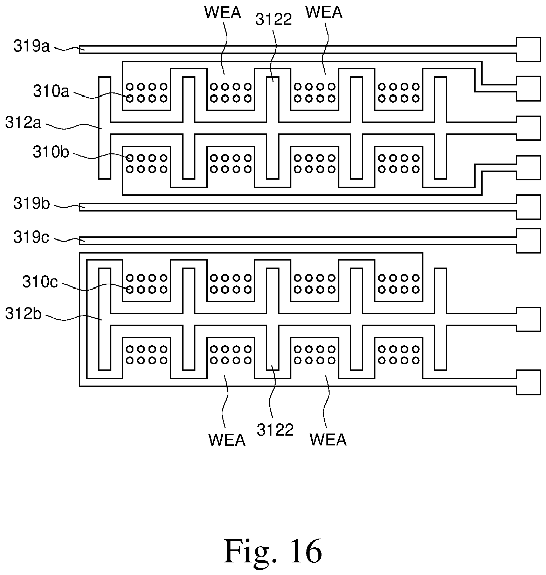

It can be understood that the distance between the working electrode and the counter electrode will also affect the maximum electric field intensity of the working electrode. For example, among a plurality of working electrodes arranged in an array, the maximum electric field intensity of the working electrode far from the counter electrode is relatively small. In order to increase the maximum electric field intensity of the working electrode, please referring to Fig. 16, in one embodiment, the substrate plate can be divided into a plurality of working electrode areas WEA, and a plurality of working electrodes 310a, 310b or 310c are arranged in each working electrode area WEA. The counter electrodes 312a, 312b include a plurality of finger structures 3122. The finger structures 3122 of the counter electrodes 312a, 312b extends between the working electrode areas WEA to form a structure in which the counter electrodes 312a, 312b surround each working electrode area WEA in a U shape or circle shape, so that the distance between the working electrodes 310a, 310b or 310c in each working electrode area WEA and the counter electrode 312a or 312b are similar to increase the maximum electric field intensity of the working electrode 310a, 310b or 310c farther from the counter electrode 312a or 312b, thereby enhancing the signal intensity. In one embodiment, a ratio of long axis to short axis of each working electrode area WEA is between 0.8 and 1.2. In a preferred embodiment, the ratio of long axis to short axis of each working electrode area WEA approaches 1.

Please refer to FIG. 16 again, in one embodiment, the biosensor apparatus of the present invention further includes reference electrodes 319a, 319b, 319c, and the structure of the reference electrodes 319a, 319b, 319c is similar to the counter electrode, that is, the top surfaces of the reference electrodes 319a, 319b, 319c are higher than the top surfaces of the working electrodes 310a, 310b, and 310c, and the functions of the reference electrodes 319a, 319b, 319c are well known by a person skilled in the field of the present invention, so it will not repeat it here. The working electrodes 310a, 310b are matched with the counter electrode 312a, and the working electrodes 310c are matched with the counter electrode 312b. The working electrodes 310a and 310b can be respectively connected with different biological probes to simultaneously detect different target molecules. Alternatively, the working electrodes 310a and 310b can be connected with the same biological probe to enhance the sensing signal. In one embodiment, limited by the area of the substrate plate, a plurality of working electrode regions WEA can be arranged in an array and electrically connected to each other, and the working electrodes 310c can be connected with the same biological probe to enhance the sensing signal.

In summary, the biosensor apparatus of the present invention includes a plurality of working electrodes and a counter electrode protruding beyond the insulating layer, and the protruding height of the counter electrode is greater than the protruding height of the working electrode, so that the maximum electric field intensity of the working electrode can be enhanced to increase the electrochemical reaction, thereby improving the sensitivity of sensing.

Although the present disclosure has been described in considerable detail with reference to certain embodiments thereof, other embodiments are possible. Therefore, the spirit and scope of the appended claims should not be limited to the description of the embodiments contained herein.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims.

## Claims

1. A biosensor apparatus, comprising:

   a substrate plate (303); and

a plurality of metal conductive layers (306a, 306b) disposed over the substrate plate (303) and each of the metal conductive layers (306a, 306b) having a first upper surface (307); and being **characterized by** further comprising:

a plurality of working electrodes (310) disposed over the first upper surface (307) of the corresponding metal conductive layers (306a), wherein each of the working electrodes (310) has a first top surface (311) that is higher than the first upper surface (307) of the metal conductive layer (306a);

a counter electrode (312) disposed over the first upper surface (307) of the corresponding metal conductive layer (306b) and adjacent to the working electrodes (310), wherein the counter electrode (312) has a second top surface (3121) that is higher than the first top surfaces (311) of the working electrodes (310); and

an insulating layer (308) covering the metal conductive layers (306a, 306b) and surrounding the working electrodes (310) and the counter electrode (312), wherein a second upper surface (313) of the insulating layer (308) is between the first top surfaces (311) of the working electrodes (310) and the first upper surface (307) of the metal conductive layers (306a, 306b), so that the working electrodes (310) and the counter electrode (312) protrude beyond the second upper surface (313) of the insulating layer (308).

2. The biosensor apparatus of claim 1, which is **characterized in that** a height difference between the first top surface (311) of each working electrode (310) and the second top surface (3121) of the counter electrode (312) is less than 0.15 $\mu$m.

3. The biosensor apparatus of claim 1, which is **characterized in that** a height difference between the first top surface (311) of each working electrode (310) and the second top surface (3121) of the counter electrode (312) is less than 0.1 $\mu$m.

4. The biosensor apparatus of claim 1, which is **characterized in that** a height difference between the first top surface (311) of each working electrode (310) and the second top surface (3121) of the counter electrode (312) is less than 0.05 $\mu$m.

5. The biosensor apparatus of claim 1, which is **characterized in that** each of the working electrodes (310) has an aspect ratio ranged from 0.125 to about 7.5.

6. The biosensor apparatus of claim 1, which is **characterized in that** a first height (H1) from the first top surface (311) of each of the working electrodes (310) to the first upper surface (307) of the corresponding metal conductive layer (306a, 306b) is ranged from 0.05 $\mu$m to 1 $\mu$m.

7. The biosensor apparatus of claim 1, which is **characterized in that** a second height (H2) from the first top surface (311) of each of the working electrodes (310) to the second upper surface (313) of the insulating layer (308) is ranged from 0.01 $\mu$m to 0.55 $\mu$m.

8. The biosensor apparatus of claim 1, which is **characterized in that** a third height (H3) from the second top surface (3121) of the counter electrode (312) to the first upper surface (307) of the corresponding metal conductive layer (306a, 306b) is ranged from 0.05 $\mu$m to 1 $\mu$m.

9. The biosensor apparatus of claim 1, which is **characterized in that** a fourth height (H4) from the second top surface (3121) of the counter electrode (312) to the second upper surface (313) of the insulating layer (308) is ranged from 0.01 $\mu$m to 0.55 $\mu$m.

10. The biosensor apparatus of claim 1, which is **characterized in that** the substrate plate (303) comprises a plurality of working electrode areas (WEA), each of the working electrode areas (WEA) comprises a plurality of the working electrodes (310), and the counter electrode (312) comprises a plurality of finger structures (3122) extending between the working electrode areas (WEA).

11. The biosensor apparatus of claim 10, which is **characterized in that** a ratio of long axis to short axis of each working electrode area (WEA) is between 0.8 and 1.2.

12. The biosensor apparatus of claim 10, which is **characterized in that** the counter electrode (312) surrounds each of the working electrode areas (WEA) in a U shape or circle shape.

13. The biosensor apparatus of claim 1, which is **characterized in that** the insulating layer (308) covers a sidewall (305) of the metal conductive layers (306a, 306b).

14. The biosensor apparatus of claim 1, which is **characterized in that** the insulating layer (308) covers a portion of a sidewall (309) of each the working electrode (310) and the counter electrode (312).

15. The biosensor apparatus of claim 1, which is **characterized in that** the working electrodes (310) are in a shape of a cylinder or a regular polygonal prism.

16. The biosensor apparatus of claim 1, which is **characterized in that** each of the working electrodes (310) comprises at least one biological probe (314), and the biological probe (314) is nucleic acid, cell, antibody, enzyme, polypeptide, peptide, aptamer, carbohydrate or combinations thereof.


**Amended claims in accordance with Rule 137(2) EPC.**

1. A biosensor apparatus (300), comprising:

   a substrate plate (303);
   a plurality of metal conductive layers (306a, 306b) disposed over the substrate plate (303) and each of the metal conductive layers (306a, 306b) having a first upper surface (307); and
   a plurality of working electrodes (310) disposed over the first upper surface (307) of the corresponding metal conductive layers (306a), wherein each of the working electrodes (310) has a first top surface (311) that is higher than the first upper surface (307) of the metal conductive layer (306a);
   **characterized by**
   a counter electrode (312) disposed over the first upper surface (307) of the corresponding metal conductive layer (306b) and adjacent to the working electrodes (310), wherein the counter electrode (312) has a second top surface (3121) that is higher than the first top surfaces (311) of the working electrodes (310);
   an insulating layer (308) covering the metal conductive layers (306a, 306b) and surrounding the working electrodes (310) and the counter electrode (312);
   a second upper surface (313) of the insulating layer (308) is between the first top surfaces (311) of the working electrodes (310) and the first upper surface (307) of the metal conductive layers (306a, 306b), so that the working electrodes (310) and the counter electrode (312) protrude beyond the second upper surface (313) of the insulating layer (308).

2. The biosensor apparatus (300) of claim 1, wherein a height difference between the first top surface (311) of each working electrode (310) and the second top surface (3121) of the counter electrode (312) is less than 0.15 $\mu$m.

3. The biosensor apparatus (300) of claim 2, wherein a height difference between the first top surface (311) of each working electrode (310) and the second top surface (3121) of the counter electrode (312) is less than 0.1 $\mu$m.

4. The biosensor apparatus (300) of claim 3, wherein a height difference between the first top surface (311) of each working electrode (310) and the second top surface (3121) of the counter electrode (312) is less than 0.05 $\mu$m.

5. The biosensor apparatus (300) of any one of the preceding claims, wherein each of the working electrodes (310) has an aspect ratio ranged from 0.125 to about 7.5.

6. The biosensor apparatus (300) of any one of the preceding claims, wherein a first height (H1) from the first top surface (311) of each of the working electrodes (310) to the first upper surface (307) of the corresponding metal conductive layer (306a, 306b) is ranged from 0.05 $\mu$m to 1 $\mu$m.

7. The biosensor apparatus (300) of any one of the preceding claims, wherein a second height (H2) from the first top surface (311) of each of the working electrodes (310) to the second upper surface (313) of the insulating layer (308) is ranged from 0.01 $\mu$m to 0.55 $\mu$m.

8. The biosensor apparatus (300) of any one of the preceding claims, wherein a third height (H3) from the second top surface (3121) of the counter electrode (312) to the first upper surface (307) of the corresponding metal conductive layer (306a, 306b) is ranged from 0.05 $\mu$m to 1 $\mu$m.

9. The biosensor apparatus (300) of any one of the preceding claims, wherein a fourth height (H4) from the second top surface (3121) of the counter electrode (312) to the second upper surface (313) of the insulating layer (308) is ranged from 0.01 $\mu$m to 0.55 $\mu$m.

10. The biosensor apparatus (300) of any one of the preceding claims, wherein the substrate plate (303) comprises a plurality of working electrode areas (WEA), each of the working electrode areas (WEA) comprises a plurality of the working electrodes (310), and the counter electrode (312) comprises a plurality of finger structures (3122) extending between the working electrode areas (WEA).

11. The biosensor apparatus (300) of claim 10, wherein a ratio of long axis to short axis of each working electrode area (WEA) is between 0.8 and 1.2.

12. The biosensor apparatus (300) of claim 10 or 11, wherein the counter electrode (312) surrounds each of the working electrode areas (WEA) in a U shape or circle shape.

13. The biosensor apparatus (300) of any one of the preceding claims, wherein the insulating layer (308) covers a sidewall (305) of the metal conductive layers (306a, 306b).

14. The biosensor apparatus (300) of any one of the preceding claims, wherein the insulating layer (308) covers a portion of a sidewall (309) of each the working electrode (310) and the counter electrode (312).

15. The biosensor apparatus (300) of any one of the preceding claims, wherein the working electrodes (310) are in a shape of a cylinder or a regular polygonal prism.

16. The biosensor apparatus (300) of any one of the preceding claims, wherein each of the working electrodes (310) comprises at least one biological probe (314), and the biological probe (314) is nucleic acid, cell, antibody, enzyme, polypeptide, peptide, aptamer, carbohydrate or combinations thereof.

Fig. 1

200

Fig. 2

200

Fig. 3

200

Fig. 4

200

208

206

204
203
202

## Fig. 5

200

210

208

206

204
203
202

## Fig. 6

Fig. 7

Fig. 8

200

209

211

212

205

207

206

204

203

202

## Fig. 9

200

209

216

211

212

205

207

206

204

203

202

## Fig. 10

200

211
209
212
218
205
207
206
204
203
202

Fig. 11

200
209
211
212
213
218
205
207
206
204
203
202

H2

Fig. 12

300

308    310    314         318        316
              A                          

312    A

Fig. 13

Fig. 14A

EP 4 124 853 A1

Fig. 14B

Fig. 15

Fig. 16

Europäisches
Patentamt

European
Patent Office

Office européen
des brevets

# EUROPEAN SEARCH REPORT

Application Number

EP 21 18 8472

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/248282 A1 (SOBHA M PISHARODY [US] ET AL) 9 December 2004 (2004-12-09) | 1-9,11, 16 | INV. G01N27/327 |
| Y | * paragraph [0011]; figures 14,18 * | 12,15 | |
| X | US 2021/196178 A1 (CHOI HEON JIN [KR] ET AL) 1 July 2021 (2021-07-01) | 1-11,13, 14 | |
| Y | * the whole document * | 12,15 | |
| Y | US 2019/004002 A1 (YUAN CHIUN-JYE [TW] ET AL) 3 January 2019 (2019-01-03) * figure 13 * | 12,15 | |
| A | US 7 625 469 B1 (YELTON WILLIAM G [US] ET AL) 1 December 2009 (2009-12-01) * figures 3A-3C * | 1-16 | |
| A | US 2009/045061 A1 (FARROW REGINALD C [US] ET AL) 19 February 2009 (2009-02-19) * figures 6A-6J * | 1-16 | |

|  | TECHNICAL FIELDS SEARCHED (IPC) |
|---|---|
|  | G01N |

The present search report has been drawn up for all claims

| Place of search | Date of completion of the search | Examiner |
|---|---|---|
| Munich | 4 January 2022 | Schindler, Martin |

EPO FORM 1503 03.82 (P04C01)

## ANNEX TO THE EUROPEAN SEARCH REPORT
## ON EUROPEAN PATENT APPLICATION NO.

EP 21 18 8472

This annex lists the patent family members relating to the patent documents cited in the above-mentioned European search report.
The members are as contained in the European Patent Office EDP file on
The European Patent Office is in no way liable for these particulars which are merely given for the purpose of information.

04-01-2022

| Patent document cited in search report | | Publication date | Patent family member(s) | | Publication date |
|---|---|---|---|---|---|
| US 2004248282 | A1 | 09-12-2004 | AU | 2002363627 A1 | 26-05-2003 |
| | | | CA | 2450109 A1 | 22-05-2003 |
| | | | EP | 1417352 A2 | 12-05-2004 |
| | | | JP | 2005509846 A | 14-04-2005 |
| | | | US | 2004248282 A1 | 09-12-2004 |
| | | | WO | 03042396 A2 | 22-05-2003 |
| US 2021196178 | A1 | 01-07-2021 | KR | 20210085099 A | 08-07-2021 |
| | | | US | 2021196178 A1 | 01-07-2021 |
| US 2019004002 | A1 | 03-01-2019 | CN | 109211994 A | 15-01-2019 |
| | | | EP | 3654024 A1 | 20-05-2020 |
| | | | JP | 6942250 B2 | 29-09-2021 |
| | | | JP | 2020527243 A | 03-09-2020 |
| | | | KR | 20200023476 A | 04-03-2020 |
| | | | TW | 201905988 A | 01-02-2019 |
| | | | US | 2019004002 A1 | 03-01-2019 |
| | | | WO | 2019011296 A1 | 17-01-2019 |
| US 7625469 | B1 | 01-12-2009 | NONE | | |
| US 2009045061 | A1 | 19-02-2009 | NONE | | |

EPO FORM P0459

For more details about this annex : see Official Journal of the European Patent Office, No. 12/82

**EP 4 124 853 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ALLEN J. BARD ; LARRY R. FAULKNER.** Electrochemical Methods: Fundamentals and Applications. Wiley